# EUROPÄISCHE PATENTSCHRIFT

(11) **EP 2 582 880 B1**
(45) Veröffentlichungstag und Bekanntmachung des Hinweises auf die Patenterteilung: **16.12.2015**
(21) Anmeldenummer: 11722328.9
(22) Anmeldetag: 24.05.2011
(51) Int. Cl.: E01B 29/28, B23P 19/06, B25B 23/14

(54) **VERFAHREN ZUM ANZIEHEN VON SCHRAUBVERBINDUNGEN.**
METHOD FOR TIGHTENING SCREW CONNECTIONS
PROCÉDÉ DE SERRAGE D'ASSEMBLAGES PAR VIS

(30) Priorität: 15.06.2010 DE 102010023798
(43) Veröffentlichungstag der Anmeldung: 24.04.2013
(73) Patentinhaber: Robel Bahnbaumaschinen GmbH, 83395 Freilassing (DE)
(72) Erfinder: WIDLROITHER, Otto, 83395 Freilassing (DE)
(86) Internationale Anmeldenummer: PCT/EP2011/002567
(87) Internationale Veröffentlichungsnummer: WO 2011/157350

(56) Entgegenhaltungen:
- DE-A1- 1 708 657
- DE-A1- 19 524 051
- DE-A1- 19 856 329
- DE-A1-102007 048 186

## Beschreibung

Die Erfindung betrifft ein Verfahren zum Anziehen von Schraubverbindungen für die Verbindung von Schwellen und Schienen mittels eines angetriebenen Schraubenschlüssels unter Erzielung eines bestimmten Soll-Drehmomentes, wobei ein während des Einschraubens einer Schraube wirksames Einschraub-Drehmoment erfasst und ein davon abhängiger Kompensationswert ermittelt wird und das Soll-Drehmoment in Abhängigkeit vom zuvor ermittelten Kompensationswert zum Festziehen der Schraube erhöht wird.

DE 198 56 329 A1 beschreibt ein Verfahren zur Befestigung von Bauteilen mit einer Schraube, wobei das Drehmoment beim Eindrehen der Schraube erfasst wird. Das Anziehen der Schraube erfolgt unter Addition eines Klemm-Momentes, also mit der Summe der beiden Momente.

Durch DE 1 708 657 ist eine Vorrichtung zum Festziehen von Schwellenschrauben mit einem vom Einschraubmoment unabhängigen Festziehmoment bekannt. Mit einem derartigen Einschraubvorgang ergibt sich allerdings der Nachteil, dass die die Schwelle mit der Schiene verbindenden und tatsächlich wirksamen Anpresskräfte in Abhängigkeit von den Reibungswerten unterschiedlich sind, obwohl die jeweiligen Anzugmomente konstant gehalten werden. Die unterschiedlichen Reibungswerte können sich z. B. aus einem unterschiedlichen Zustand der Gewindeoberfläche ergeben.

Die Aufgabe der vorliegenden Erfindung liegt nun in der Schaffung eines Verfahrens der eingangs genannten Art, mit dem für alle Schraubverbindungen eine konstante Anpresskraft gewährleistet ist.

Diese Aufgabe wird erfindungsgemäß mit einem Verfahren der gattungsgemäßen Art dadurch erreicht, dass die Schraube in einem ersten Einschraubvorgang unmittelbar nach dem vollständigen Eindrehen in eine Schwelle wenigstens eine Umdrehung aufgeschraubt und anschließend in einem zweiten Einschraubvorgang wiederum eingeschraubt wird, wobei das Ermitteln des Kompensationswertes erst im zweiten Einschraubvorgang erfolgt.

Mit der Erfassung und Berücksichtigung des Einschraub-Drehmomentes ist es möglich, dass jeder Schraubzyklus bezüglich des Festziehmomentes exakt auf jede einzelne Schraubverbindung abgestimmt werden kann und somit immer eine konstante Anpresskraft wirksam ist. Damit ist es für die Verbindung von Schwelle und Schiene unerheblich, ob die Schrauben oder die Schraubenbohrungen unterschiedlich beschaffen sind.

Weitere Vorteile der Erfindung ergeben sich aus der Zeichnungsbeschreibung.

Im Folgenden wird die Erfindung anhand eines in der Zeichnung dargestellten Ausführungsbeispieles näher beschrieben.

Es zeigen: Fig. 1 eine vereinfachte Seitenansicht einer Schraubmaschine, Fig. 2 eine vergrößerte Ansicht eines Servoschraubers, Fig. 3 eine Schraubverbindung zur Fixierung einer Schiene an einer Schwelle, und Fig. 4 und 5 je eine grafische Darstellung des Drehmomentes in Abhängigkeit vom Drehwinkel.

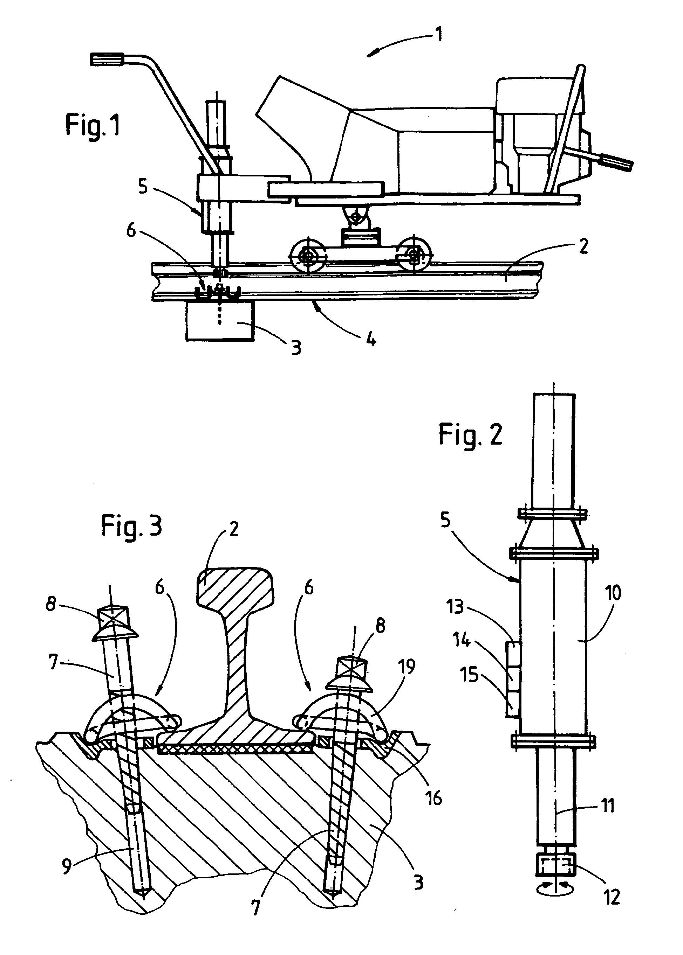

Eine in Fig. 1 ersichtliche Schraubmaschine 1 ist auf einem aus Schienen 2 und Schwellen 3 gebildeten Gleis 4 verfahrbar und mit höhenverstellbaren Servoschraubern 5 ausgestattet. Diese dienen zum Anziehen einer Schraubverbindung 6, die sich - gemäß einem in Fig. 3 näher dargestellten Beispiel - aus einer Schraube 7 mit einem Schraubenkopf 8 und einer in der Schwelle 3 befindlichen Schraubenbohrung 9 zusammensetzt.

Wie in Fig. 2 ersichtlich, weist jeder Servoschrauber 5 einen Servomotor 10 sowie einen um eine Achse 11 drehbaren Schraubenschlüssel 12 auf. Außerdem ist ein mit einem Datenspeicher ausgestatteter Prozessor 13 mit einem Drehwinkelmesser 14 sowie mit einem Drehmomentgeber 15 verbunden.

Wie in Fig. 3 ersichtlich, ist zwischen einer auf der Schwelle 3 aufliegenden Unterlagsplatte 16 und dem Schraubenkopf 8 ein Befestigungsmittel 19 in Form einer elastischen Spannklemme vorgesehen. Diese kontaktiert einerseits die Unterlagsplatte 16 und andererseits die Schiene 2.

Die Schraube 7 wird von der in der linken Bildhälfte dargestellten Ausgangsposition in einem sogenannten Leerlauf in die Schwelle 3 eingedreht, wobei das dafür aufzuwendende Drehmoment in Abhängigkeit von verschiedenen Störfaktoren, wie Rost, Sand, Fett usw. in größerem Ausmaß variieren kann.

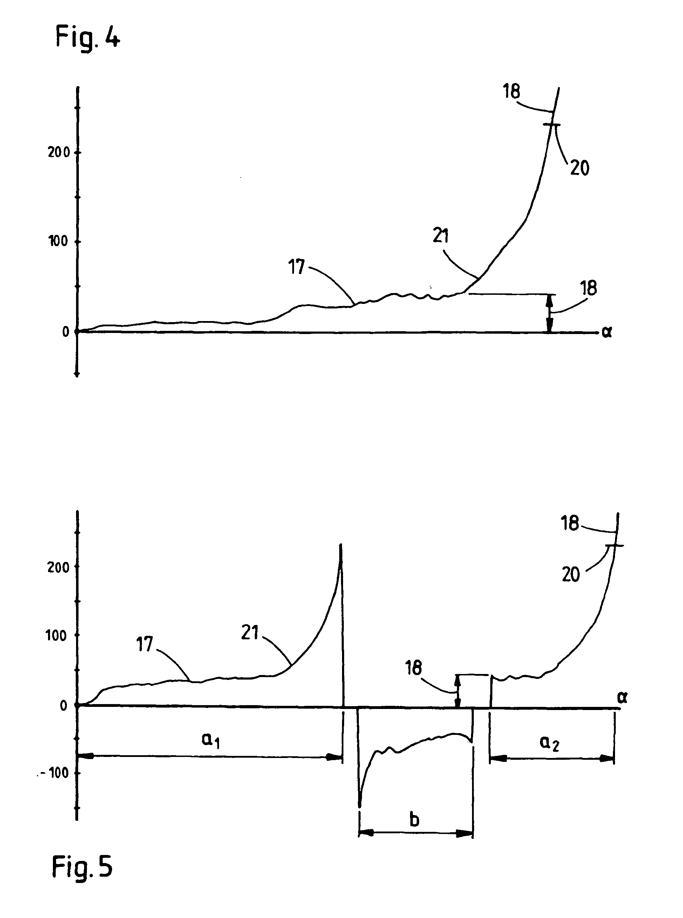

Da der entscheidende Faktor bei der Verbindung von Schiene 2 und Schwelle 3 nicht das Drehmoment, sondern die durch die Schraubverbindung 6 wirksame Anpresskraft ist, wird ein beim Einschrauben (Leerlauf) registriertes Einschraub-Drehmoment 17 abgespeichert. Siehe dazu Fig. 4, bei der der gesamte Drehmomentverlauf in Bezug auf den Drehwinkel α (x-Achse) der Schraube 7 dargestellt ist. Das auf Grund einer Störung erhöhte Einschraub-Drehmoment 17 (hier beispielsweise 40 Nm) wird, in einer nicht erfindungsgemäßen Variante, abschließend als Kompensationswert 18 zu einem wählbaren Soll-Drehmoment 20 (z.B. 230 Nm) für das Festziehen der Schraube 7 addiert. Damit erhöht sich schließlich das effektiv durch die Schraubverbindung 6 wirksame Drehmoment auf 270 Newtonmeter.

Während des Einschraubens wird, in einer weiteren nicht erfindungsgemäßen Variante, parallel zur Erfassung eines Drehwinkels α der Schraube 7 eine infolge eines sprunghaften Anstieges des Einschraub-Drehmomentes 17 feststellbare Kopfauflage 21 des Schraubenkopfes 8 auf dem Befestigungsmittel 19 automatisch registriert. Anschließend wird als Kompensationswert 18 jenes Einschraub-Drehmoment 17 gewählt, das bei einem Drehwinkel α unmittelbar vor der Kopfauflage 21 registriert wurde. Welcher Wert für diesen Drehwinkel α tatsächlich gewählt wird, hängt schließlich vom Typ der Schraubverbindung 6 bzw. auch von entsprechenden Erfahrungswerten ab.

Wie in Fig. 5 ersichtlich, wird die Schraube 7 schließlich erfindungsgemäß in einem ersten Einschraubvorgang (a1) unmittelbar nach dem vollständigen Eindrehen in die Schwelle 3 in einem Ausschraubvorgang (b) wenigstens eine Umdrehung aufgeschraubt. Anschließend wird die Schraube 7 in einem zweiten Einschraubvorgang (a2) wiederum eingeschraubt, wobei ein Erfassen des Kompensationswertes 18 erst in diesem zweiten Einschraubvorgang (a2) erfolgt. Dieser wird zum Abschluss des Schraubvorganges dem Soll-Drehmoment 20 hinzugefügt.

Dieses Verfahren kompensiert einen Effekt, der sich häufig im praktischen Einsatz zeigt. Dabei verändert sich das Einschraub-Drehmoment 17 speziell zwischen dem ersten und zweiten Schraubvorgang derselben Schraubverbindung 6. Die Ursache können hydraulische Effekte (Wasser, Fett, Öl im Gewindesackloch) oder Schmutz, Verunreinigung, Grate am Gewinde sein.

Das erfindungsgemäße Verfahren kann abweichend von der dargestellten Type einer Schienenfixierung natürlich auch in Verbindung mit anderen Befestigungsarten, wie dem sogenannten K-Oberbau, verwendet werden.

## Patentansprüche

1. Verfahren zum Anziehen von Schraubverbindungen (6) für die Verbindung von Schwellen (3) und Schienen (2) mittels eines angetriebenen Schraubenschlüssels (12) unter Erzielung eines bestimmten Soll-Drehmomentes (20), wobei ein während des Einschraubens einer Schraube (7) wirksames Einschraub-Drehmoment (17) erfasst und ein davon abhängiger Kompensationswert (18) ermittelt wird und das Soll-Drehmoment (20) in Abhängigkeit vom zuvor ermittelten Kompensationswert (18) zum Festziehen der Schraube (7) erhöht wird, **dadurch gekennzeichnet, dass** die Schraube (7) in einem ersten Einschraubvorgang unmittelbar nach dem vollständigen Eindrehen in eine Schwelle (3) wenigstens eine Umdrehung aufgeschraubt und anschließend in einem zweiten Einschraubvorgang wiederum eingeschraubt wird, wobei das Ermitteln des Kompensationswertes (18) erst im zweiten Einschraubvorgang erfolgt.

## Claims

1. A method for tightening screw connections (6) for the connection of sleepers (3) and rails (2) by means of a power-driven wrench (12) while achieving a defined target torque (20), wherein a screwing-in torque (17) effective during the screwing-in of a screw (7) is detected and a compensation value (18) dependent thereon is determined and, for tightening the screw (7), the target torque (20) is increased in dependence upon the compensation value (18) determined before, **characterized in that**, in a first screwing-in operation, the screw (7) - immediately after having been screwed completely into a sleeper (3) - is unscrewed by at least one rotation and subsequently, in a second screwing-in operation, is screwed in again, wherein the compensation value (18) is only determined during the second screwing-in operation.

## Revendications

1. Procédé de serrage de connexions vissées (6) pour la connexion de traverses (3) et de rails (2) au moyen d'une clé à vis entraînée (12) en obtenant un certain couple de rotation de consigne (20), dans lequel un couple de rotation de vissage (17) efficace pendant le vissage d'une vis (7) est détecté et une valeur de compensation (18) qui en dépend est déterminée, et le couple de rotation de consigne (20) est augmenté en fonction de la valeur de compensation (18) déterminée auparavant pour le serrage de la vis (7), **caractérisé en ce que** la vis (7) est dévissée d'au moins un tour dans un premier processus de vissage directement après le vissage complet dans une traverse (3), puis revissée dans un second processus de vissage, dans lequel la détermination de la valeur de compensation (18) s'effectue seulement dans le second processus de vissage.
